# EUROPEAN PATENT SPECIFICATION

(11) **EP 2 591 971 B1**
(45) Date of publication and mention of the grant of the patent: **01.08.2018**
(21) Application number: 12191360.2
(22) Date of filing: 06.11.2012
(51) Int. Cl.: B61C 17/06

(54) **Electrical equipment for railway vehicle**
Elektrische Ausrüstung für Schienenfahrzeug
Équipement électrique pour véhicule ferroviaire

(30) Priority: 10.11.2011 JP 2011246048
(43) Date of publication of application: 15.05.2013
(73) Proprietor: Hitachi, Ltd., Tokyo (JP)
(72) Inventor: Inoue, Takeshi, Chiyoda-ku, Tokyo 100-8220 (JP); Horino, Masaya, Chiyoda-ku, Tokyo 100-8220 (JP); Watanabe, Katsumi, Chiyoda-ku, Tokyo 100-8220 (JP); Sairenji, Kazuhiro, Chiyoda-ku, Tokyo 100-8220 (JP)
(74) Representative: Gill, Stephen Charles

(56) References cited:
- EP-A1- 1 340 662
- EP-A1- 1 675 197
- JP-A- 2000 118 397
- JP-U- 62 057 503
- US-A1- 2004 157 117

## Description

### BACKGROUND OF THE INVENTION

### 1. Technical Field

The present invention relates to electrical equipment for railway vehicle.

### 2. Description of the Related Art

Fig. 5 is an explanatory drawing illustrating a configuration in which electric equipment to which the invention is applied is mounted on a vehicle body of a railway vehicle.

Curtain rails 30 are fixed on a lower surface of a floor of a vehicle body 20 in parallel with a direction of travel K of the vehicle, and electric equipment 1 is mounted on the curtain rails 30.

Fig. 6 illustrates a state in which the electric equipment 1 is mounted on a curtain rail 32 fixed in parallel to a direction of crosstie L of the vehicle body 20. An arrow M indicates the vertical direction of the vehicle body.

Fig. 7 illustrates a principal portion in Fig. 5 in detail, showing a state in which the electric equipment 1 is hung from the curtail rails 30 fixed in parallel to the direction of travel via a hanging part 40.

Fig. 8A is a plan view illustrating an example of electric equipment for railway vehicle of the related art, Fig. 8B is a front view of the Fig. 8A, and is a front view of the electric equipment for railway vehicle, Fig. 8C is a right side view of Fig. 8B, and Fig. 8D illustrates a portion A in Fig. 8C showing in an enlarged scale.

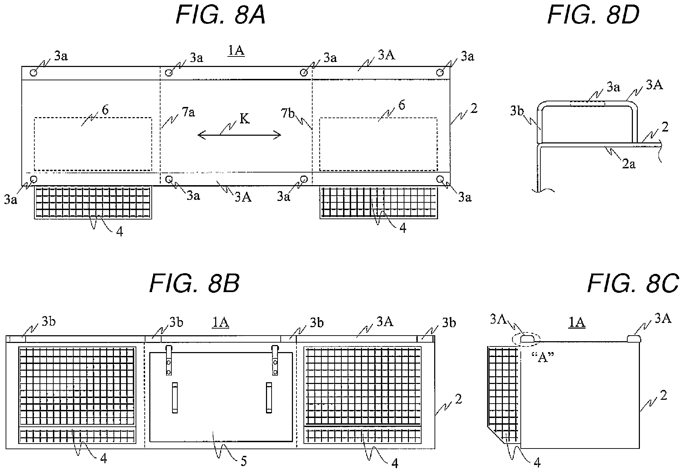

In Figs. 8A, 8B, 8C, and 8D, partitioning plates 7a and 7b are provided vertically as illustrated by broken lines in Fig. 8A in an interior of electric equipment for railway vehicle 1A manufactured in a rectangular box shape, the electric equipment for railway vehicle 1A including a door 5 in an intermediate portion of a front surface via a hinge at an upper end thereof, and net-like covers 4 on both sides thereof.

In the interiors of the covers 4 on the both sides, large-sized inverter units 6 illustrated in broken lines including a semiconductor element integrated therein are housed, and cooling fins for the semiconductor elements of the inverter units 6 are positioned on the back side of the covers 4. Capacitor units, not illustrated, are housed behind the inverter units 6 and, in addition, converters and transformers, not illustrated, are also housed.

In the interior of the door 5 in a middle portion, a power unit and a controller are housed.

An arrow K in Fig. 8A indicates the direction of travel of the vehicle including the electric equipment for railway vehicle 1A hung therefrom.

The electric equipment for railway vehicle 1A includes hanging beams 3A having a U-shape in cross section and welded to front and rear portions of an upper surface of a ceiling plate 2a of a box member 2 in the opposite direction, and bolt holes 3a are formed on bottom portions of the hanging beams 3A, so that the electric equipment for railway vehicle 1A is hung from beams under the floor of the vehicle via the bolt holes 3a.

When hanging the electric equipment for railway vehicle 1A from the beams under the floor of the vehicle, notches 3b are formed as illustrated in Fig. 8B on the outer side surfaces of the bolt holes 3a in order to achieve convenience of a fixing work using bolts.

Since the beams under the floor of the vehicle, which are fixed to the electric equipment for railway vehicle 1A with bolts, are arranged at different positions with respect to the direction of travel of the vehicle depending on the manufactures or the types of the vehicle, mounting positions of the bolt holes 3a may be changed in accordance with the vehicle.

Incidentally, the mounting position of the electric equipment to be housed under the floor of the vehicle with respect to the vehicle may be limited in the directions other than the direction of travel of the vehicle due to limitations on the vehicle side.

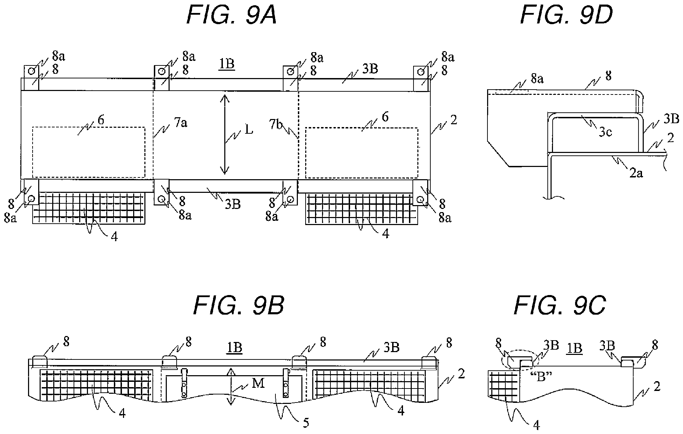

Figs. 9A to 9D are drawings illustrating electric equipment for railway vehicle 1B of the related art for accommodating limitations in mounting position in the directions other than the direction of travel of the vehicle. In the same manner as Figs. 8A to 8D, Fig. 9A is a plan view, Fig. 9B is a front view of Fig. 9A, Fig. 9C is a right side view of Fig. 9B, and Fig. 9D illustrates a portion B in Fig. 9C showing in an enlarged scale. Since the arrangement of the door and the mounting positions of the covers in the front view are the same as those in Fig. 8B, the lower portion from the center is omitted.

In Figs. 9A, 9B, 9C, and 9D, a portion different from that in Figs. 8A to 8D illustrated as the structure of the related art described above is specifically a configuration of hanging parts, and other configurations are the same as those in Figs. 8A to 8D.

In other words, hanging beams 3B have substantially the same shape as the hanging beam 3A illustrated in Figs. 8A to 8D, and hanging parts 8 are welded to an upper portion of the hanging beam 3B.

Each of the hanging parts 8 is bent downward at both sides and has an inverted U-shape in the front view of Fig. 9B, and lower ends of the inverted U-shaped hanging parts 8 from the intermediate portion portions to rear ends are welded to an upper end of the hanging beam 3B, and an upper portion of the rear end is bent downward and welded to both sides. The rear ends of the portions from the intermediate portion to front ends of the both sides of the hanging part 8 are welded to a front surface of the hanging beam 3B and a front surface of the box member 2.

The upper portions of the hanging parts 8 are formed with bolt holes 8a, so that the electric equipment for railway vehicle 1B is hung from the beams under the floor of the vehicle via the bolt holes 8a.

Arrows L and M in Fig. 9A indicate the direction of crosstie and the vertical direction of the vehicle from which the electric equipment for railway vehicle 1B is hung.

In the electric equipment for railway vehicle configured in this manner, the limitation in mounting position on the vehicle side is accommodated by changing the shape of the hanging parts 8 in the direction of crosstie and the vertical direction.

In order to reduce a stress applied to mounting portions, bias of load share among the hanging parts is preferably reduced by providing the bolt holes 3a in Figs. 8A to 8D and the hanging parts 8 in Figs. 9A to 9D so as to be aligned with the partitioning plates 7a and 7b and near the ends of the box member in the direction of travel having higher rigidity.

JP-A-2000-118397 is an example of the related art.

However, since the hanging beam 3A extending continuously with respect to the direction of travel of the vehicle is provided in the electric equipment for railway vehicle configured as described above, the mass of the electric equipment for railway vehicle is increased.

In addition, since the hanging parts are additionally provided in order to accommodate the limitations in mounting position with respect to directions other than the direction of travel of the vehicle, the number of components is increased.

In Figs. 8A to 8D, although the stress applied to mounting portions is reduced by reducing the bias of the load share among the hanging parts by providing the bolt holes 3a and the hanging parts 8 in Figs. 9A to 9D at the positions of the partitioning plates 7a and 7b at an end in the direction of travel, there may be a case where the mounting positions need to be added to positions other than the positions of the partitioning plates 7a and 7b and the ends in the direction of travel depending on the vehicle. However, when the mounting positions are provided at positions other than the positions of the partitioning plates 7a and 7b and the ends in the direction of travel, the bias of the load share among the hanging parts may be increased, and hence the stress applied on the mounting portions may be increased.

### SUMMARY OF THE INVENTION

It is an object of the present invention to provide electrical equipment for railway vehicle having light-weight hanging parts composed of a small number of components without affecting the arrangement of electrical equipment in a box even when mounting positions of the hanging parts are changed I according to a limitation in mounting position on the vehicle side.

A first aspect of the present invention provides electrical equipment for a railway vehicle according to claim 1, a second aspect of the present invention provides electrical equipment for a railway vehicle according to claim 2, and a third aspect of the present invention provides a railway vehicle according to claim 9. Electrical equipment for railway vehicle according to the invention is characterized by a structure in which a metallic plate is inserted between a hanging part having a shape corresponding to limitations in mounting position in the direction of crosstie and the vertical direction on the vehicle side and a box member formed of a thin plate and the hanging part and the metallic plate, and the metallic plate and the box member are joined.

According to the invention, by manufacturing required hanging parts individually, increase in entire mass of the electric equipment for railway vehicle is prevented. Also, the above described configuration is achieved only by changing the shape of the hanging part without adding a part for accommodating the limitation in the mounting positions in the direction of crosstie and in the vertical direction on the vehicle side, so that increase in the number of components is avoided.

Also, when providing individual hanging parts at positions away from left and right ends of the box member and partitioning plates, bias of load share among the respective hang parts occurs, so that the strength of the joint portion between the box member and part of the hanging parts may be focused as a problem. However, by inserting the metallic plate between the hanging part and the box member as in the invention, a stress generated at the joint portion is alleviated and hence the problem of the strength is resolved. In other words, since the hanging part may be installed at an arbitrary position with respect to the direction of travel of the vehicle, the limitation in mounting position on the vehicle side in the direction of travel may be accommodated. Furthermore, since necessity of increase in the thickness of the plate which constitutes the box member is eliminated by alleviating the stress by insertion of the metallic plate, increase in entire mass of the electric equipment for railway vehicle is prevented. Also, since the hanging part is not provided in the interior of the box member, the positions of the respective electric equipment in the interior of the box member may be determined without being affected by the mounting position of the hanging part.

### BRIEF DESCRIPTION OF THE DRAWINGS

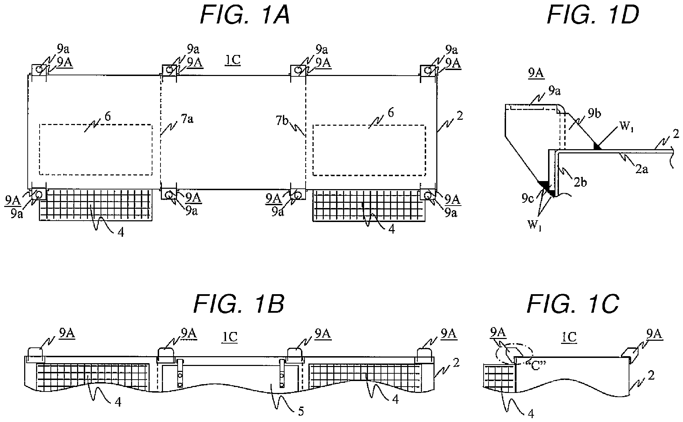

Fig. 1A is a plan view of electric equipment for railway vehicle according to a first embodiment of the invention;
Fig. 1B is a front view of the electric equipment for railway vehicle;
Fig. 1C is a right side view of the electric equipment for railway vehicle;
Fig. 1D is an enlarged view of a portion C in Fig. 1C;

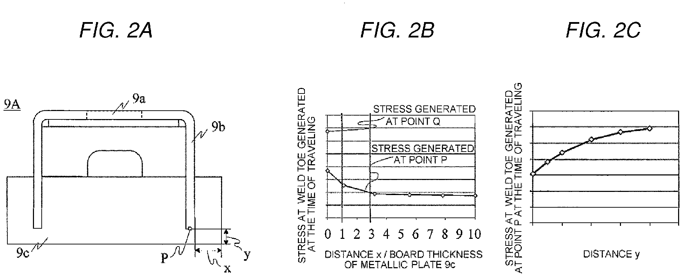

Fig. 2A is a plan view of a hanging part of the electric equipment for railway vehicle of the first embodiment of the invention illustrating optimal dimensions of a metallic plate in a case where the hanging part and the metallic plate are joined by weld and the board thickness of the metallic plate is set to be double the board thickness of a box member;
Fig. 2B is a graph showing a relationship between a stress generated at the welded portion between the hanging part and the metallic plate at the time of traveling and the dimension of the metallic plate in the direction of travel, and a stress generated at a welded portion between the hanging part and the box member in a case where the metallic plate is not provided;
Fig. 2C is a graph showing a relationship between the stress generated at the welded portion between the hanging part and the metallic plate at the time of traveling and the dimension of the metallic plate in the vertical direction;

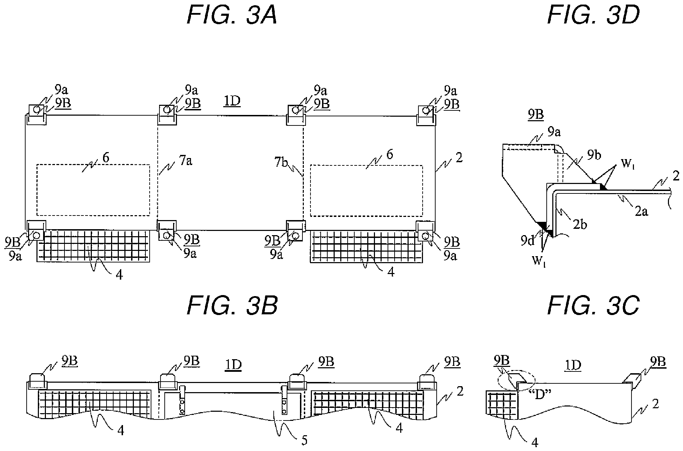

Fig. 3A is a plan view of electric equipment for railway vehicle according to a second embodiment of the invention;
Fig. 3B is a front view of the electric equipment for railway vehicle;
Fig. 3C is a right side view of the electric equipment for railway vehicle;
Fig. 3D is an enlarged view of a portion D in Fig. 3C;

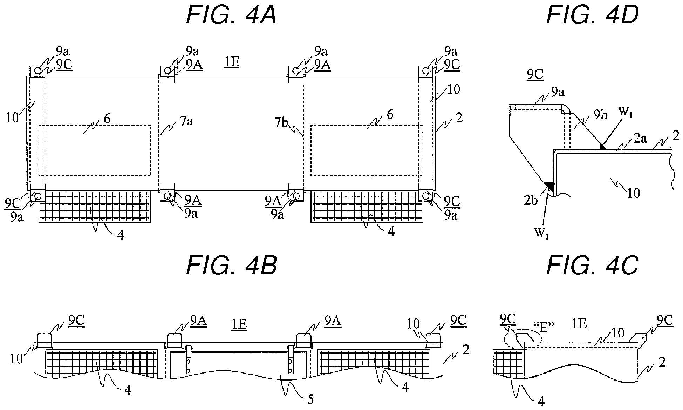

Fig. 4A is a plan view of electric equipment for railway vehicle according to a third embodiment of the invention;
Fig. 4B is a front view of the electric equipment for railway vehicle;
Fig. 4C is a right side view of the electric equipment for railway vehicle;
Fig. 4D is an enlarged view of a portion E in Fig. 3C;

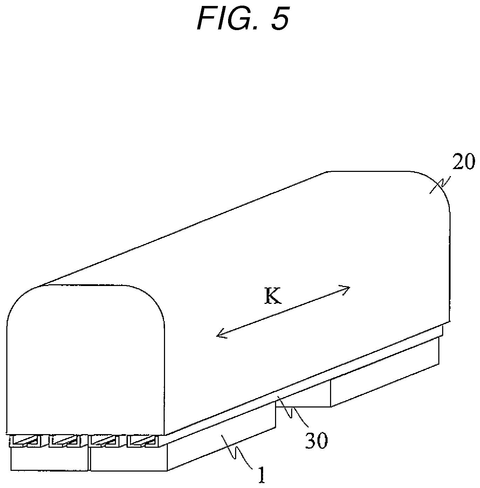

Fig. 5 is an explanatory drawing illustrating a structure in which electric equipment is hung from curtain rails in the direction of travel of a vehicle body;

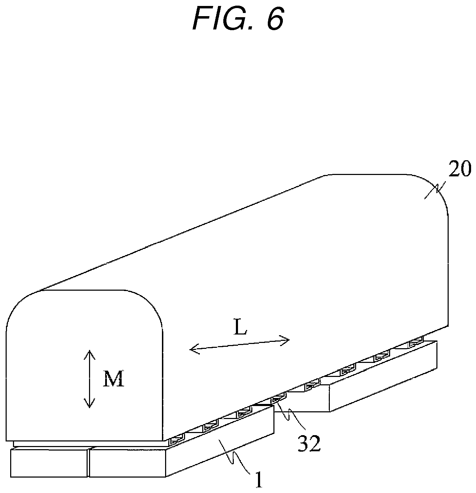

Fig. 6 is an explanatory drawing illustrating a structure in which the electric equipment is hung from the curtain rails in the direction of crosstie of the vehicle body;

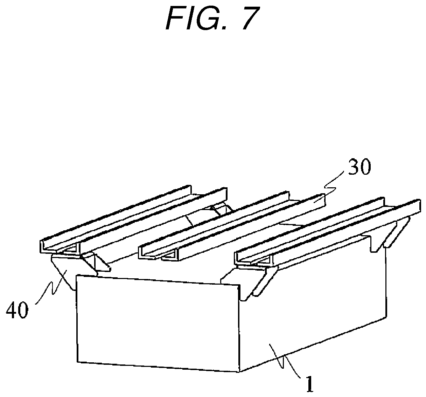

Fig. 7 is a detailed drawing of a principal portion of Fig. 5;
Fig. 8A is a plan view illustrating an example of electric equipment for railway vehicle of the related art;
Fig. 8B is a front view of the electric equipment for railway vehicle;
Fig. 8C is a right side view of the electric equipment for railway vehicle;
Fig. 8D is an enlarged view of a portion A in Fig. 8C;
Fig. 9A is a plan view illustrating an example of electric equipment for railway vehicle of the related art different from that in Figs. 1A to 1D;
Fig. 9B is a front view of the electric equipment for railway vehicle of the related art;
Fig. 9C is a right side view of the electric equipment for railway vehicle of the related art; and
Fig. 9D is an enlarged view of a portion B in Fig. 9C.

### DESCRIPTION OF THE PREFERRED EMBODIMENTS

Referring now to Fig. 1A to Fig. 4D, an embodiment of electric equipment for railway vehicle to which the invention is applied will be described. In the description given below, the same functional components are designated by the same reference numerals and overlapped description will be omitted.

Fig. 1A is a plan view of electric equipment for railway vehicle according to a first embodiment of the invention, Fig. 1B is a front view of the electric equipment for railway vehicle, Fig. 1C is a right side view of the electric equipment for railway vehicle, and Fig. 1D is an enlarged view of a portion C in Fig. 1C. Figs. 1A to 1D are different from Figs. 8A to 8D and Figs. 9A to 9D in a configuration of a hanging part, and other portions are the same as those in Figs. 8A to 8D and Figs. 9A to 9D.

A hanging part 9A includes a hanging part 9b and a metallic plate 9c. In the front view of Fig. 1B, the hanging part 9b is formed by bending a metallic plate into an inverted U-shape, includes mounting portions at both bent sides and an upper portion connecting the mounting portions on the both sides, and the upper portion is formed with a bolt hole. In Fig. 1D, the hanging part 9b bent downward is welded W₁ to a box member 2. Although the hanging part 9b and the box member 2 may be joined by joint methods other than continuous fillet weld, for example, by using intermittent fillet weld, if the strength of the joint portion becomes a problem, the continuous fillet weld is preferable. The dimensions of the hanging part 9b may be changed corresponding to limitations in the mounting positions in the direction of crosstie and in the vertical direction on the vehicle side.

In Fig. 1D, a portion of the hanging part 9b from an intermediate portion to a lower end is secured to the metallic plate 9c by continuous fillet weld W₁. The hanging part 9A having an integral structure including the hanging part 9b and the metallic plate 9c is welded W₁ to a side plate 2b of the box member 2 along the periphery of the metallic plate 9c, and is secured to a ceiling plate 2a of the box member 2 from the intermediate portion of the hanging part 9b in Fig. 1D to a right end portion by the continuous fillet weld W₁. The hanging part 9b and the metallic plate 9c, the side plate 2b and the metallic plate 9c, and the ceiling plate 2a and the hanging part 9b may be joined using a joint method other than weld, such as spot weld or rivet joint. However, if the strength of the joint portion becomes a problem, weld is preferably used.

The mounting positions of the hanging part 9A to the box member 2 in the direction of travel are determined by the limitation of the mounting positions on the vehicle side. Electric equipment for railway vehicle 1C configured in this manner is hung from a beam under a floor of the vehicle via bolt holes 9a formed on an upper portion of the hanging part 9A. The electric equipment for railway vehicle 1C configured in this manner is capable of alleviating a stress of the side plate 2b of the box member where the maximum stress is generated when being hung from the vehicle by the provision of the metallic plate 9c between the side plate 2b of the box member 2 and the hanging part 9b.

In other words, the problem of the strength of the welded portion between part of the hanging parts and the box member generated by bias of load share among the respective hanging parts when the hanging parts are provided at positions away from left and right ends of the box member and the partitioning plates is resolved, and hence the hanging parts may be installed at arbitrary positions with respect to the direction of travel.

Figs. 2A to 2C illustrate optimal dimensions of the metallic plate 9c of the hanging part 9A in a case where the hanging part 9A and the metallic plate 9c illustrated in Figs. 1A to 1D are joined by using weld and the board thickness of the metallic plate 9c is set to be double the board thickness of the box member 2, in which Fig. 2A is a plan view, and Fig. 2B is a graph showing a relationship between a stress generated at a lower end P of the welded portion between the hanging part 9b and the metallic plate 9C illustrated in Fig. 2A in the vertical direction when the railway vehicle travels and a value obtained by dividing a distance x between the end of the hanging part 9b, not illustrated, and the end of the metallic plate 9c in the direction of travel illustrated in Fig. 2A by the board thickness of the metallic plate 9c and a stress generated at a lower end Q, not illustrated, of the welded portion between the hanging part 9b and the box member 2 in the vertical direction in a case where the metallic plate 9c is not inserted between the hanging part 9A and the box member 2, and Fig. 2C is a graph showing a relationship between the stress generated at the point P and a distance y between a lower end of the hanging part 9b and the lower end of the metallic plate 9c in the vertical direction illustrated in Fig. 2A.

As illustrated in Fig. 2B, the stress generated at the time of traveling at the point P by inserting the metallic plate 9c is approximately half the stress generated at the time of travelling at the point Q in the case in which the metallic plate is not inserted, and hence an effect of alleviating the stress is obtained by the insertion of the metallic plate 9c. Therefore, as a condition which allows weld between the metallic plate 9c and the hanging part 9b, it is preferable to set the dimensions of the metallic plate 9c in the direction of travel to a value so that the distance x becomes equal to or larger than a leg length of weld between the hanging part 9b and the metallic plate 9c. Since the leg length of weld is substantially the same as the board thickness of the plate to be welded in general, it is preferable that the distance x is substantially equal to or larger than the board thickness of the metallic plate 9c.

The effects of alleviating the stress generated at the point P at the time of travelling, which is achieved by increasing the dimension of the metallic plate 9c in the direction of travel are substantially the same when the distance x is three times or more the board thickness of the metallic plate 9c, and hence the dimension of the metallic plate 9c in the direction of travel is preferably such that the distance x is on the order of three times or more the board thickness of the metallic plate 9c.

The stress generated at the time of travelling at the point P is increased as the distance y increases. Therefore, as a condition which allows minimizing the distance y and the continuous fillet weld between the metallic plate 9c and the hanging part 9b, it is preferable to set the dimensions of the metallic plate 9c in the vertical direction to a value so that the distance y becomes a value on the order to the leg length of weld between the hanging part 9b and the metallic plate 9c. Since the leg length of weld is substantially the same as the board thickness of the plate to be welded in general, it is preferable that the distance y is substantially equal to the board thickness of the metallic plate 9c.

Fig. 3A is a plan view of electric equipment for railway vehicle according to a second embodiment of the invention, Fig. 3B is a front view of the electric equipment for railway vehicle, Fig. 3C is a right side view of the electric equipment for railway vehicle, and Fig. 3D is an enlarged view of a portion D in Fig. 3C. A point different from Figs. 1A to 1D shown in the first embodiment is the shape of a metallic plate 9d and a joint portion in association therewith and other portions are the same as Figs. 1A to 1D.

In other words, the metallic plate 9d has an L-shape and, in Fig. 3D, portions of the hanging part 9b from an intermediate portion to a lower end and from the intermediate portion to the right end are secured to the metallic plate 9d by continuous fillet weld. A hanging part 9B having an integral structure composed of the hanging part 9b and the metallic plate 9d is welded to the side plate 2b and the ceiling plate 2a of the box member 2. It is preferable that dimensions of the metallic plate 9d of the hanging part 9B are substantially the same as the dimension of the metallic plate 9c illustrated in Figs. 2A to 2C. The hanging part 9b and the metallic plate 9d, and the hanging part 9B and the side plate 2b and the ceiling plate 2a may be joined using a joint method other than weld. However, if the strength of the joint portion becomes a problem, weld is preferably used.

Electric equipment for railway vehicle 1D configured in this manner is capable of alleviating a stress generated at the time of traveling and applied on the ceiling plate 2a of the box member when being hung from the vehicle in addition to the effects obtained in the first embodiment.

Fig. 4A is a plan view illustrating the electric equipment for railway vehicle according to a third embodiment of the invention, Fig. 4B is a front view of the electric equipment for railway vehicle, Fig. 4C is a right side view of the electric equipment for railway vehicle, and Fig. 4D is an enlarged view of a portion E in Fig. 4C. A point different from the first embodiment illustrated in Figs. 1A to 1D is a hanging structure provided at both ends of the box member 2 in Fig. 4A, and other configurations are the same as those in Figs. 1A to 1D.

In other words, lateral beams 10 penetrating in the direction of crosstie are provided in the interior of the box member at the both ends of the box member 2 in Fig. 4A. The lateral beams 10 are bent downward at both sides and have an inverted U-shape in the front view in Fig. 4B, and the dimension thereof in the direction of travel is the same as a hanging part 9C. In Fig. 4D, the lateral beams 10 are secured to the side plate 2b by continuous weld and to the ceiling plate 2a by spot weld. The hanging part 9b is secured to the ceiling plate 2a and the side plate 2b by the continuous weld without the intermediary of the metallic plate on the outside of the box member 2 at a position where the lateral beams 10 are secured by the continuous weld with respect to the side plate 2b.

By providing the lateral beams 10 so as to penetrate through the direction of crosstie, the rigidity of entire part of electric equipment for railway vehicle 1E is improved while installing the hanging parts 9A at arbitrary positions with respect to the direction of travel by using the hanging parts 9A as at least one of the plurality of hanging parts, the limitation in the direction of travel on the vehicle side is also accommodated.

## Claims

1. Electrical equipment for a railway vehicle configured to be hung from a plurality of beams under a floor of the railway vehicle, the electrical equipment comprising a box member (2), and a hanging part (9b) joined to a ceiling plate (2a) and a side plate (2b) of the box member, the electrical equipment further comprising:
a metallic plate (9c, 9d) joined to the hanging part inserted between the side plate of the box member and the hanging part, the metallic plate being joined with at least left and right and a lower portion of the side plate, and the metallic plate extending sideways in a substantially horizontal direction of the vehicle beyond each end of the hanging part,
wherein the distance in the substantially horizontal direction of the vehicle between one end of the hanging part and the corresponding end of the metallic plate is substantially equal to or larger than the thickness of the metallic plate.

2. Electrical equipment for a railway vehicle configured to be hung from a plurality of beams under a floor of the railway vehicle, the electrical equipment comprising a box member (2), and a hanging part (9b) joined to a ceiling plate (2a) and a side plate (2b) of the box member, the electrical equipment further comprising:
a metallic plate (9c, 9d) joined to the hanging part inserted between the side plate of the box member and the hanging part, the metallic plate being joined with at least left and right and a lower portion of the side plate, and the metallic plate extending downwardly in a vertical direction of the vehicle beyond a lower end of the hanging part,
wherein the distance in the vertical direction of the vehicle between the lower end of the hanging part and a lower end of the metallic plate is substantially equal to the thickness of the metallic plate.

3. The electrical equipment for a railway vehicle according to Claim 1 or Claim 2, wherein the metallic plate is configured to be thicker than the side plate of the box member.

4. The electrical equipment for a railway vehicle according to any one of Claims 1 to 3, wherein the hanging plate and the metallic plate are joined by a weld joint, and the hanging part and the side plate of the box member are joined by a weld joint or rivet joint.

5. The electrical equipment for a railway vehicle according to any one of Claims 1 to 4, wherein the metallic plate is formed of an L-shaped metallic plate, the hanging plate and the metallic plate are joined by inserting the metallic plate between the ceiling plate and the hanging part, and the metallic plate is joined to the ceiling plate and the side plate.

6. The electrical equipment for a railway vehicle according to Claim 1, wherein the distance between the one end of the hanging plate and the corresponding end of the metallic plate in the substantially horizontal direction of the vehicle is equal to or larger than three times the thickness of the metallic plate.

7. The electrical equipment for a railway vehicle according to any one of Claims 1 to 6, having a plurality of the hanging parts, the metallic plate being inserted between at least one of the plurality of hanging parts and the corresponding side plate.

8. The electrical equipment for a railway vehicle according to any one of Claim 7, wherein the or each hanging part includes two mounting portions formed by bending the metallic plate into an inverted U-shape and an upper portion connecting the two mounting portions, and the upper portion is formed with a bolt hole.

9. A railway vehicle having a plurality of beams under a floor thereof, and having the electrical equipment according to any one of the previous claims hung from the beams by the hanging part(s) of the electrical equipment.

10. A railway vehicle according to claim 9 as dependent on claim 7, wherein the electrical equipment has hanging parts at the front and the rear ends thereof relative to the direction of travel of the vehicle, respective metallic plates being inserted between the front and rear hanging parts and the corresponding side plates.

## Patentansprüche

1. Elektrische Ausrüstung für ein Schienenfahrzeug, die konfiguriert ist, von einer Vielzahl von Trägern unter einem Boden des Schienenfahrzeugs abgehängt zu sein, wobei die elektrische Ausrüstung ein Kastenelement (2) und einen hängenden Teil (9b) umfasst, der mit einer Deckenplatte (2a) und einer Seitenplatte (2b) des Kastenelements verbunden ist, wobei die elektrische Ausrüstung ferner Folgendes umfasst:
eine Metallplatte (9c, 9d), die mit dem hängenden Teil verbunden ist, die zwischen der Seitenplatte des Kastenelements und dem hängenden Teil eingeführt ist, wobei die Metallplatte mit zumindest einem linken und einem rechten und einem unteren Abschnitt der Seitenplatte verbunden ist und wobei sich die Metallplatte seitlich in eine im Wesentlichen horizontale Richtung des Fahrzeugs über jedes Ende des hängenden Teils hinaus erstreckt,
wobei der Abstand in der im Wesentlichen horizontalen Richtung des Fahrzeugs zwischen einem Ende des hängenden Teils und dem entsprechenden Ende der Metallplatte größer oder im Wesentlichen gleich groß ist wie die Dicke der Metallplatte.

2. Elektrische Ausrüstung für ein Schienenfahrzeug, die konfiguriert ist, von einer Vielzahl von Trägern unter einem Boden des Schienenfahrzeugs abgehängt zu sein, wobei die elektrische Ausrüstung ein Kastenelement (2) und einen hängenden Teil (9b) umfasst, der mit einer Deckenplatte (2a) und einer Seitenplatte (2b) des Kastenelements verbunden ist, wobei die elektrische Ausrüstung ferner Folgendes umfasst:
eine Metallplatte (9c, 9d), die mit dem hängenden Teil verbunden ist, die zwischen der Seitenplatte des Kastenelements und dem hängenden Teil eingeführt ist, wobei die Metallplatte mit zumindest einem linken und rechten und einem unteren Abschnitt der Seitenplatte verbunden ist und wobei sich die Metallplatte nach unten in eine vertikale Richtung des Fahrzeugs über ein unteres Ende des hängenden Teils hinaus erstreckt,
wobei der Abstand in vertikaler Richtung des Fahrzeugs zwischen dem unteren Ende des hängenden Teils und einem unteren Ende der Metallplatte im Wesentlichen gleich groß ist wie die Dicke der Metallplatte.

3. Elektrische Ausrüstung für ein Schienenfahrzeug nach Anspruch 1 oder Anspruch 2, wobei die Metallplatte konfiguriert ist, dicker zu sein als die Seitenplatte des Kastenelements.

4. Elektrische Ausrüstung für ein Schienenfahrzeug nach einem der Ansprüche 1 bis 3, wobei die hängende Platte und die Metallplatte über eine Schweißnaht verbunden sind, und der hängende Teil und die Seitenplatte des Kastenelements über eine Schweißnaht oder eine Nietverbindung verbunden sind.

5. Elektrische Ausrüstung für ein Schienenfahrzeug nach einem der Ansprüche 1 bis 4, wobei die Metallplatte aus einer L-förmigen Metallplatte ausgebildet ist, wobei die hängende Platte und die Metallplatte durch Einführen der Metallplatte zwischen der Deckenplatte und dem hängenden Teil verbunden sind, und wobei die Metallplatte mit der Deckenplatte und der Seitenplatte verbunden ist.

6. Elektrische Ausrüstung für ein Schienenfahrzeug nach Anspruch 1, wobei der Abstand zwischen dem einen Ende der hängenden Platte und dem entsprechenden Ende der Metallplatte in der im Wesentlichen horizontalen Richtung des Fahrzeugs größer oder im Wesentlichen gleich groß ist wie das Dreifache der Dicke der Metallplatte.

7. Elektrische Ausrüstung für ein Schienenfahrzeug nach einem der Ansprüche 1 bis 6, die eine Vielzahl von hängenden Teilen aufweist, wobei die Metallplatte zwischen zumindest einen aus der Vielzahl von hängenden Teilen und der entsprechenden Seitenplatte eingeführt ist.

8. Elektrische Ausrüstung für ein Schienenfahrzeug nach Anspruch 7, wobei der oder jeder hängende Teil zwei Montageabschnitte, die durch Biegen der Metallplatte in eine umgekehrte U-Form ausgebildet werden, und einen oberen Abschnitt umfasst, der die zwei Montageabschnitte verbindet, und wobei der obere Abnschnitt mit einem Bolzenloch ausgebildet ist.

9. Schienenfahrzeug mit einer Vielzahl von Trägern unter einem Boden davon und mit einer elektrischen Ausrüstung nach einem der vorangegangenen Ansprüche, die über den/die hängenden Teil(e) der elektrischen Ausrüstung von den Balken abgehängt sind.

10. Schienenfahrzeug nach Anspruch 9, abhängig von Anspruch 7, wobei die elektrische Ausrüstung auf einem vorderen und hinteren Ende davon, bezogen auf die Fahrtrichtung des Fahrzeugs, hängende Teile aufweist, wobei entsprechende Metallplatten zwischen den vorderen und hinteren hängenden Teilen und den entsprechenden Seitenplatten eingeführt sind.

## Revendications

1. Équipement électrique pour un véhicule ferroviaire configuré pour être suspendu à une pluralité de poutres sous un plancher du véhicule ferroviaire, l'équipement électrique comprenant un élément de boîtier (2), et une partie de suspension (9b) reliée à une plaque de plafond (2a) et une plaque latérale (2b) de l'élément de boîtier, l'équipement électrique comprenant en outre :
une plaque métallique (9c, 9d) reliée à la partie de suspension insérée entre la plaque latérale de l'élément de boîtier et la partie de suspension, la plaque métallique étant reliée au moins à une partie gauche et droite et inférieure de la plaque latérale, et la plaque métallique s'étendant latéralement dans une direction sensiblement horizontale du véhicule au-delà de chaque extrémité de la partie de suspension,
dans lequel la distance dans la direction sensiblement horizontale du véhicule entre une extrémité de la partie de suspension et l'extrémité correspondante de la plaque métallique est sensiblement égale ou supérieure à l'épaisseur de la plaque métallique.

2. Équipement électrique pour un véhicule ferroviaire configuré pour être suspendu à une pluralité de poutres sous un plancher du véhicule ferroviaire, l'équipement électrique comprenant un élément de boîtier (2), et une partie de suspension (9b) reliée à une plaque de plafond (2a) et une plaque latérale (2b) de l'élément de boîtier, l'équipement électrique comprenant en outre :
une plaque métallique (9c, 9d) reliée à la partie de suspension insérée entre la plaque latérale de l'élément de boîtier et la partie de suspension, la plaque métallique étant reliée à au moins une partie gauche et droite et inférieure de la plaque latérale, et la plaque métallique s'étendant vers le bas dans une direction verticale du véhicule au-delà d'une extrémité inférieure de la partie de suspension,
dans lequel la distance dans la direction verticale du véhicule entre l'extrémité inférieure de la partie de suspension et une extrémité inférieure de la plaque métallique est sensiblement égale à l'épaisseur de la plaque métallique.

3. Équipement électrique pour un véhicule ferroviaire selon la revendication 1 ou la revendication 2, dans lequel la plaque métallique est configurée pour être plus épaisse que la plaque latérale de l'élément de boîtier.

4. Équipement électrique pour un véhicule ferroviaire selon l'une quelconque des revendications 1 à 3, dans lequel la plaque de suspension et la plaque métallique sont reliées par un joint de soudure, et la partie de suspension et la plaque latérale de l'élément de boîtier sont reliées par un joint de soudure ou une rivure.

5. Équipement électrique pour un véhicule ferroviaire selon l'une quelconque des revendications 1 à 4, dans lequel la plaque métallique est formée d'une plaque métallique en forme de L, la plaque de suspension et la plaque métallique sont reliées en insérant la plaque métallique entre le plaque de plafond et la partie de suspension, et la plaque métallique est reliée à la plaque de plafond et la plaque latérale.

6. Équipement électrique pour un véhicule ferroviaire selon la revendication 1, dans lequel la distance entre l'extrémité de la plaque de suspension et l'extrémité correspondante de la plaque métallique dans la direction sensiblement horizontale du véhicule est égale ou supérieure à trois fois l'épaisseur de la plaque métallique.

7. Équipement électrique pour un véhicule ferroviaire selon l'une quelconque des revendications 1 à 6, comportant une pluralité de parties de suspension, la plaque métallique étant insérée entre au moins l'une de la pluralité de parties de suspension et la plaque latérale correspondante.

8. Équipement électrique pour un véhicule ferroviaire selon la revendication 7, dans lequel la ou chaque partie de suspension comprend deux parties de montage formées en pliant la plaque métallique en une forme de U inversé et une partie supérieure raccordant les deux parties de montage, et la partie supérieure est formée avec un trou de boulon.

9. Véhicule ferroviaire ayant une pluralité de poutres sous un plancher de celui-ci, et ayant l'équipement électrique selon l'une quelconque des revendications précédentes suspendu aux poutres par la ou les parties de suspension de l'équipement électrique.

10. Véhicule ferroviaire selon la revendication 9 lorsqu'elle dépend de la revendication 7, dans lequel l'équipement électrique comporte des parties de suspension aux extrémités avant et arrière de celui-ci par rapport à la direction de déplacement du véhicule, des plaques métalliques respectives étant insérées entre les parties de suspension avant et arrière et les plaques latérales correspondantes.
